# EUROPÄISCHE PATENTSCHRIFT

(11) **EP 1 388 151 B1**
(45) Veröffentlichungstag und Bekanntmachung des Hinweises auf die Patenterteilung: **11.11.2009**
(21) Anmeldenummer: 02743008.1
(22) Anmeldetag: 14.05.2002
(51) Int. Cl.: G21C 17/022

(54) **VERFAHREN ZUM SCHUTZ DER BAUTEILE DES PRIMÄRSYSTEMS EINES SIEDEWASSERREAKTORS INSBESONDERE VOR SPANNUNGSRISSKORROSION**
METHOD FOR PROTECTING THE COMPONENTS OF A PRIMARY SYSTEM OF A BOILING WATER REACTOR, ESPECIALLY AGAINST STRESS CRACKING CORROSION
PROCEDE POUR PROTEGER LES ELEMENTS DU CIRCUIT PRIMAIRE D'UN REACTEUR A EAU BOUILLANTE, NOTAMMENT DE LA CORROSION SOUS CONTRAINTES

(30) Priorität: 15.05.2001 DE 10123690
(43) Veröffentlichungstag der Anmeldung: 11.02.2004
(73) Patentinhaber: AREVA NP GmbH, 91052 Erlangen (DE); EnBW Kraftwerke AG, 76661 Philippsburg (DE)
(72) Erfinder: STELLWAG, Bernhard, 90482 Nürnberg (DE); RÜHLE, Wilfried, 69214 Eppelheim (DE)
(74) Vertreter: Mörtel & Höfner
(86) Internationale Anmeldenummer: PCT/EP2002/005274
(87) Internationale Veröffentlichungsnummer: WO 2002/093586

(56) Entgegenhaltungen:
- DE-A- 10 030 726
- DATABASE WPI Section Ch, Week 198901 Derwent Publications Ltd., London, GB; Class K05, AN 1989-005800 XP002218887 -& SU 653 953 A (AFANASEV A M), 15. Juli 1988 (1988-07-15)

## Beschreibung

Die Erfindung betrifft ein Verfahren zum Schutz der Bauteile des Primärsystems eines Siedewasserreaktors insbesondere vor Spannungskorrosion. In einem Siedewasserreaktor wird das Kühlmittel, das mit dem Reaktorkern in Kontakt kommt, Primärkühlmittel, und die dem Primärkühlmittel ausgesetzten Bauteile und Leitungen werden Primärsystem genannt. Das Primärsystem eines Siedewasserreaktors beinhaltet neben dem Reaktordruckgefäß Leitungssysteme sowie diverse Einbauten und Pumpen. Die Bauteile bestehen in aller Regel aus rostfreiem Stahl, beispielsweise aus einem CrNi-Stahl oder aus einer Ni-Basislegierung wie Inconel 600. Im Siedewasserreaktor entstehen durch Radiolyse des Primärkühlmittels unter anderen die Reaktionsprodukte Wasserstoffperoxyd, Sauerstoff und Wasserstoff. Die sich durch den Überschuss von Oxidationsmitteln ergebenden oxidierenden Bedingungen fördern die Korrosion, insbesondere die Spannungsrisskorrosion der Bauteile. Um hier Abhilfe zu schaffen, ist es bekannt, dem Primärkühlmittel Wasserstoff beizumengen. Dieser bindet im Primärkühlmittel enthaltene Oxidationsmittel und verschiebt das elektrochemische Potential der Bauteiloberflächen zu negativen Werten hin. Nachteilig bei dem herkömmlichen Verfahren ist, dass relativ große Mengen an Wasserstoff benötigt werden, um einen ausreichenden Korrosionsschutz zu gewährleisten. Der hohe, mit entsprechenden Kosten verbundene Wasserstoffbedarf geht nicht zuletzt auf die Tatsache zurück, dass die elektrochemische Oxidation des Wasserstoffs auf den mit einer Oxidschicht bedeckten Bauteiloberflächen einer hohen Reaktionshemmung unterliegt, was durch erhöhte Wasserstoffkonzentrationen ausgeglichen werden muss. Nachteilig ist weiterhin der apparative Aufwand für die Dosierung des gasförmigen Wasserstoffs.

Aus EP 0736878 ist ein Verfahren bekannt, bei dem die Oxidschicht der Bauteiloberflächen im Primärsystem mit Edelmetall dotiert wird, was den Einsatz geringerer Wasserstoffmengen ermöglicht. In DE 100 30 726 A1 ist ein Verfahren beschrieben, bei dem die Mengen an Wasserstoff und Edelmetall dadurch verringert werden sollen , dass die Bauteiloberflächen mit einem eine fotokatalytisch wirkende Substanz aufweisenden Film beschichtet werden. Die fotokatalytisch wirkenden Substanzen - bevorzugt werden TiO₂ und ZrO₂ eingesetzt - sind n-Halbleiter, die durch die im Reaktor vorhandene Cherenkov-Strahlung angeregt werden, wobei sie das Korrosionspotential der Bauteiloberflächen zu negativen Werten hin verschieben.

Aufgabe der Erfindung ist es, ein alternatives Verfahren zum Schutz der Bauteile des Primärsystems eines Siedewasserreaktors vorzuschlagen, das bei geringem Material- und Zeitaufwand einen effizienten Korrosionsschutz gewährleistet.

Diese Aufgabe wird durch ein Verfahren nach Anspruch 1 gelöst. Danach wird anstelle von Wasserstoff ein unter den im Reaktorsystem vorhandenen Bedingungen oxidierbarer Alkohol vorzugsweise in flüssiger Form in das Primärkühlmittel eingespeist, wobei die Bauteiloberflächen blank oder nur von einer Eigenoxidschicht überzogen sind. Unter einer Eigenoxidschicht ist dabei eine Oxidschicht zu verstehen, die sich durch Korrosion des Bauteilmaterials gegebenenfalls unter Einlagerung von Fremdmetallen oder Fremdmetalloxiden während des Reaktorbetriebes oder während einer oxidierenden Vorbehandlung bildet. Es hat sich gezeigt, dass die Zudosierung eines Alkohols der genannten Art als alleinige Maßnahme ausreicht, das Korrosionspotential der Bauteiloberflächen auf unterhalb von -230mV liegende Werte abzusenken, wobei auf aufwändige Beschichtungen insbesondere mit fotokalytisch wirksamen Substanzen verzichtet werden kann. Der Vorteil eines Alkohols gegenüber Wasserstoff als Reduktionsmittel liegt zum einen darin, dass er in flüssiger Form bzw. als Lösung zudosiert werden kann. Eine Flüssigkeit lässt sich in apparatetechnischer Hinsicht leichter in das Primärkühlmittel einspeisen als ein gasförmiger Stoff. Des weiteren bieten die genannten Verbindungen Vorteile bei der Handhabung und Lagerung. Schließlich sind sie billiger als Wasserstoff, wodurch ebenfalls die Anlagebetriebskosten gesenkt werden können. Bei einer bevorzugten Verfahrensvariante sind die Bauteiloberflächen mit Edelmetall, beispielsweise mit Pt, dotiert, wodurch eine geringere Konzentration an Alkohol im Primärkühlmittel erforderlich ist. Vorzugsweise wird eine Konzentration des Alkohols eingehalten, die zwischen 0,1 und 300 µmol/kg im Primärkühlmittel liegt. Zweckmäßigerweise wird der Alkohol in das Kondensat- bzw. Speisewassersystem eingespeist. Die zudosierte Menge ist dabei so bemessen, dass sich die genannte Konzentration in dem Fallraum des Siedewasserreaktors einstellt. Der Fallraum ist jener Bereich im Reaktordruckbehälter, der sich von den Mündungsöffnungen der Einspeisungsrohre nach unten erstreckt. Bevorzugt werden Methanol, Ethanol und Propanol eingesetzt. Gut geeignet sind aber auch Ameisensäure, Formaldehyd und Acetaldehyd.

Die Erfindung wird nun anhand der beigefügten Zeichnungen näher erläutert. Es zeigen:
- Fig. 1: eine schematische Längsschnittdarstellung eines Seidewasserreaktors,
- Fig. 2: ein Diagramm, das die Potentiale von CrNi-Stahl und Pt bei Anwesenheit von CH₃OH bzw. Wasserstoff als Reduktionsmittel wiedergibt.

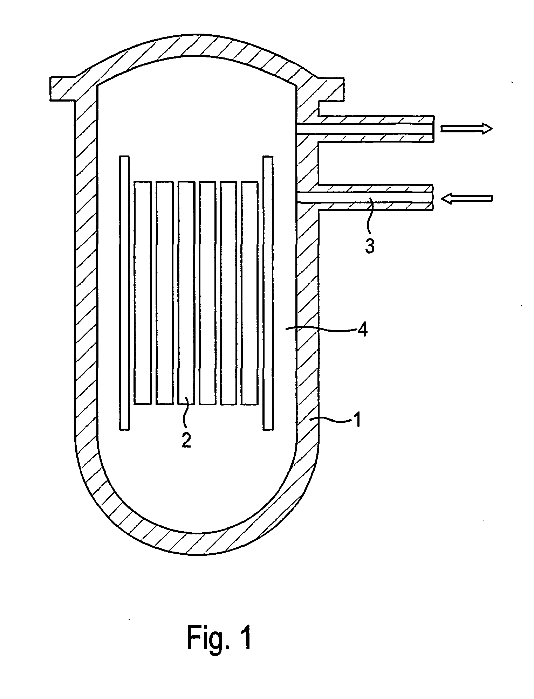

Fig. 1 zeigt schematisch und stark vereinfacht einen Siedewasserreaktor, in dessen Druckbehälter 1 sich Brennelemente 2 befinden. Als Schutz gegen Korrosion und insbesondere gegen Spannungsrisskorrosion (IGSCC) wird ein Alkohol der vorbezeichneten Art, vorzugsweise Methanol in die Speiseleitung 3 injiziert, welche sich innerhalb des Druckbehälters in Form einer ringförmigen Verteilerleitung fortsetzt. Der Reaktor befindet sich in einem Betriebszustand, bei dem die Bauteile des Reaktors, also z.B. der Druckbehälter 1 und die Kerngitter (nicht dargestellt), die üblicherweise aus CrNi-Stahl oder einer Ni-Basislegierung bestehen, blank oder nur mit einer Eigenoxidschicht überzogen sind. Der erstgenannte Fall tritt z.B. auf, wenn im Zuge einer Revision eine Oxidschicht von den Bauteiloberflächen entfernt wurde. Die in die Speiseleitung 3 injizierte Menge ist so bemessen, dass sich in dem sich an sie nach unten anschließenden Fallraum 4 eine Konzentration von 0,1 bis 300 µmol/kg Alkohol, insbesondere von Methanol einstellt. Die optimale Konzentration an Alkohol hängt von unterschiedlichen Faktoren wie Bauteilmaterial, Vorhandensein einer Edelmetalldotierung etc. ab und ist daher für den jeweiligen Reaktor individuell zu bestimmen.

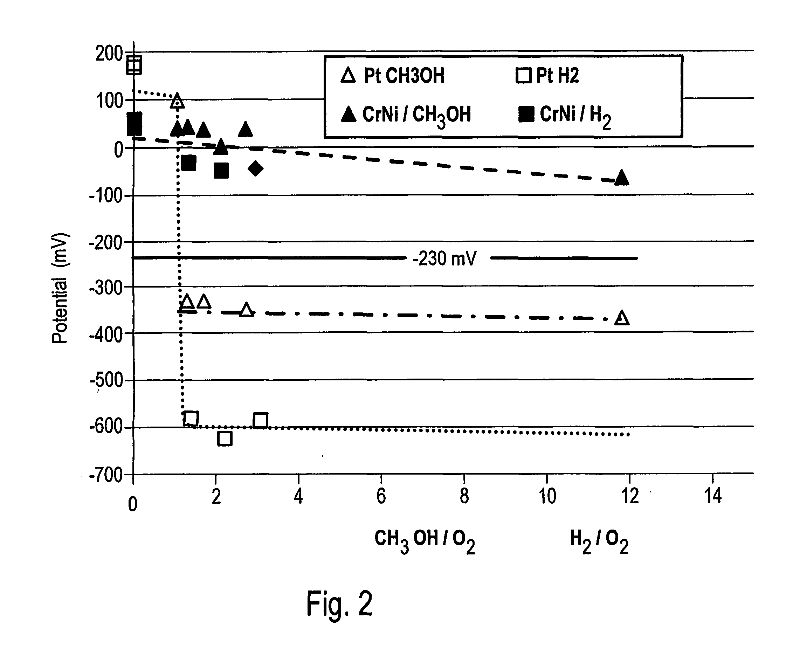

Zur Überprüfung der grundsätzlichen Wirksamkeit des vorgeschlagenen Verfahrens wurden Versuche mit Pt- und CrNi-Stahl-Elektroden durchgeführt. Die Elektroden aus CrNi-Stahl wurden 500 Std. bei 280 °C und einer den Einsatzbedingungen im Reaktor entsprechenden Wasserchemie voroxidiert. Die derart vorbehandelten CrNi-Stahl- bzw. die Pt-Elektroden wurden in einem von 280 °C heißem Wasser durchströmten Autoclaven angeordnet. Die Chemie des umgewälzten Wassers wurde entsprechend den Verhältnissen in einem Siedewasserreaktor eingestellt. Der Sauerstoffgehalt wurde zwischen 0,2 und 2 ppm gehalten. Als Reduktionsmittel wurde Methanol und zum Vergleich Wasserstoff zudosiert. Die Potentialwerte der Elektroden wurden als Funktion des Methanol- bzw. Wasserstoffgehaltes ermittelt und sind in dem Diagramm gem. Fig.2 über dem Molverhältnis Methanol/Sauerstoff bzw. Wasserstoff/Sauerstoff aufgetragen. In Fig. 2 bedeutet die Angabe "CrNi" CrNi-Stahl. Es ist erkennbar, dass eine Methanoldosierung eine mit einer Wasserstoffdosierung vergleichbare Schutzwirkung ausübt. In beiden Fällen wird das Pt-Potential unter das Schutzpotential von -230 mV abgesenkt. Bei der undotierten CrNi-Stahl-Elektrode sind bei Methanol und Wasserstoff ebenfalls vergleichbare elektrochemische Aktivitäten beobachtbar. Um hier allerdings eine Absenkung unter das Schutzpotential zu erreichen, müssen wesentlich größere Molverhältnisse eingestellt werden. Es muss also mit geringerem Sauerstoffgehalt bzw. mit einem Überschuss an Reduktionsmittel gearbeitet werden. Für einen Sauerstoffgehalt von kleiner 10 ppb und einem Methanolgehalt von 2 ppm (= 62,5 µmol/kg) wurde ein Potential von -500 mV gemessen.

Wasserstoff und Methanol oder andere Alkohole wie insbesondere Ethanol oder Propanol haben zwar mit Wasserstoff vergleichbare elektrochemische Aktivitäten. Ihre Reaktivität gegenüber bei der Radiolyse von Wasser gebildeten und stark oxidierend wirkenden OH-Radikalen ist aber größer. Ein weiterer Vorteil des vorgeschlagenen Verfahrens ergibt sich aus der wesentlich geringeren Flüchtigkeit der in Rede stehenden Alkohole. Während ein Großteil des zudosierten Wasserstoffs in die Dampfphase übertritt, mit dieser ausgetragen und als nichtkondensierbares Gas in der Abgasanlage des Reaktors unter Zugabe stöchiometrischer Sauerstoffmengen katalytisch oxidiert werden muss, ist bei Alkoholen der in die Dampfphase übertretende Anteil geringer. Außerdem ist der mit der Dampfphase ausgetragene Alkoholanteil praktisch vollständig kondensier- und damit in den Reaktor zurückführbar. Der Aufwand an Chemikalien, Vorrichtungen und steuerungstechnischen Maßnahmen ist somit gegenüber herkömmlichen Verfahren verringert.

## Patentansprüche

1. Verfahren zum Schutz der Bauteile des Primärsystems eines Siedewasserreaktors insbesondere vor Spannungsrisskorrosion, wobei das Primärsytem einen Brennelemente (2) aufnehmenden Druckbehälter (1) und eine in diesen mündende Speisewasserleitung umfasst, bei dem in das Primärkühlmittel ein unter den Bedingungen des Primärsystems oxidierbarer Alkohol so eingespeist wird, dass sich in dem sich von der Mündung der Speisewasserleitung nach unten erstreckenden innerhalb des Druckbehälters vorhandenen Fallraum (4) eine Alkoholkonzentration von 0,1 bis 300 µmol/kg einstellt, wobei die Bauteiloberflächen noch blank oder nur von einer Eigenoxidschicht überzogen sind.

2. Verfahren nach Anspruch 1,
**dadurch gekennzeichnet, dass** der Alkohol in das Kondensat- bzw. Speisewassersystem eingespeist und mit dem Speisewasser in das Primärsystem gefördert wird.

3. Verfahren nach Anspruch 1 oder 2,
**dadurch gekennzeichnet, dass** der Alkohol ausgewählt ist aus der Gruppe Methanol, Ethanol und Propanol.

4. Verfahren nach einem der Ansprüche 1 bis 3,
**dadurch gekennzeichnet, dass** die Bauteiloberflächen mit einem Edelmetall dotiert sind.

5. Verfahren nach Anspruch 4,
**dadurch gekennzeichnet, dass** die Bauteiloberflächen mit Platin dotiert sind.

## Claims

1. Method for protecting the components of the primary system of a boiling water reactor in particular from stress corrosion cracking, the primary system comprising a pressure vessel (1), which accommodates fuel assemblies (2), and a feedwater line opening out into said pressure vessel, in which an alcohol which can be oxidized under the conditions of the primary system is fed into the primary coolant in such a way that an alcohol concentration of from 0.1 to 300 µmol/kg is established in the downcomer (4) which extends downward from the opening of the feedwater line and is present within the pressure vessel, with the component surfaces still being bright or being covered only by a native oxide layer.

2. Method according to Claim 1, **characterized in that** the alcohol is fed into the condensate or feedwater system and is carried into the primary system with the feedwater.

3. Method according to Claim 1 or 2, **characterized in that** the alcohol is selected from the group consisting of methanol, ethanol and propanol.

4. Method according to one of Claims 1 to 3, **characterized in that** the component surfaces are doped with a precious metal.

5. Method according to Claim 4, **characterized in that** the component surfaces are doped with platinum.

## Revendications

1. Procédé de protection des éléments du circuit primaire d'un réacteur à eau bouillante, notamment contre la corrosion sous contrainte, le circuit primaire comprenant une enceinte sous pression (1) accueillant des crayons combustibles (2) et un conduit d'eau alimentaire débouchant dans ce dernier, dans lequel un alcool oxydable dans les conditions du circuit primaire est ajouté dans le réfrigérant primaire, de sorte qu'une concentration d'alcool de 0,1 à 300 mol s'établisse dans l'espace de descente (4) présent à l'intérieur de l'enceinte sous pression s'étendant de l'embouchure vers le bas à partir du conduit d'eau alimentaire, les surfaces des éléments étant encore à nu ou seulement recouvertes d'une couche d'oxyde natif.

2. Procédé selon la revendication 1,
**caractérisé en ce qu'**
on alimente l'alcool dans le système de condensats ou d'eau alimentaire et qu'on le transporte dans le circuit primaire avec l'eau alimentaire.

3. Procédé selon la revendication 1 ou 2,
**caractérisé en ce qu'**
on choisit l'alcool dans le groupe comprenant le méthanol, l'éthanol et le propanol.

4. Procédé selon l'une quelconque des revendications 1 à 3,
**caractérisé en ce que**
les surfaces des éléments sont dopées par zon métal précieux.

5. Procédé selon la revendication 4,
**caractérisé en ce que**
les surfaces des éléments sont dopées par du platine.
